# EUROPÄISCHE PATENTSCHRIFT

(11) **EP 3 112 540 B1**
(45) Veröffentlichungstag und Bekanntmachung des Hinweises auf die Patenterteilung: **17.10.2018**
(21) Anmeldenummer: 16170965.4
(22) Anmeldetag: 24.05.2016
(51) Int. Cl.: E03C 1/04, F16K 11/074, F16K 27/04

(54) **VENTILOBERTEIL**
UPPER PART OF A VALVE
PARTIE SUPERIEURE DE SOUPAPE

(30) Priorität: 01.07.2015 DE 202015103460 U
(43) Veröffentlichungstag der Anmeldung: 04.01.2017
(73) Patentinhaber: Flühs Drehtechnik GmbH, 58515 Lüdenscheid (DE)
(72) Erfinder: THURAU, Friedrich, 58849 Herscheid (DE)
(74) Vertreter: Patentanwälte Dörner & Kötter PartG mbB

(56) Entgegenhaltungen:
- EP-A1- 0 008 757
- DE-A1- 3 128 968
- GB-A- 2 426 039
- US-A- 2 822 112
- US-A- 6 029 699

## Beschreibung

Die Erfindung betrifft ein Ventiloberteil für eine einen Mischwasseraustritt und einen separaten Heißwasseraustritt aufweisende, mit einem Boiler in einem drucklosen System betreibare Armatur nach dem Oberbegriff des Patentanspruchs 1. Die Erfindung betrifft weiterhin eine Armatur mit einem solchen Ventiloberteil nach dem Patentanspruch 7.

Mit Hilfe von Ventiloberteilen wird der Austritt von Medien aus Armaturen gesteuert. Zu diesem Zweck wird das Ventiloberteil mittels eines Kopfstücks in das Gehäuse einer Armatur geschraubt; auf seine Spindel wird ein Drehgriff oder Hebel gesteckt. Bei bekannten Ventiloberteilen (vgl. bspw. US 2,822,112 A1 oder DE 32 07 895 C2) sind jeweils zwei Scheiben zur Steuerung des Durchflusses vorgesehen. Die Scheiben sind aus keramischem Material hergestellt. Eine der beiden Scheiben
- Steuerscheibe - ist mit Hilfe eines mit der Spindel in Verbindung stehenden Mitnehmers drehbar in dem Ventiloberteil angeordnet. Die andere Scheibe
- Einlassscheibe - ist eine feste Ventilsitzscheibe, die auch als Festscheibe bezeichnet wird. Bei Drehung der Steuerscheibe gleiten die Scheiben aneinander. Dabei wird durch den Grad der Überdeckung einer in der Steuerscheibe eingebrachten Ausnehmung mit in der Einlassscheibe mündenden Heiß- und Kaltwasserkanälen die Durchflussmenge sowie der Wärmegrad von Mischwasser gesteuert.

Der Heißwasserzulauf wird oftmals durch einen Heißwasserbereiter bzw. Boiler bereitgestellt. Dabei kann es wünschenswert sein, beispielsweise zur Bereitung von Heißwassergetränken, auch siedendes Wasser entnehmen zu können. Hierbei ergibt sich jedoch die Problematik, dass eine unbeabsichtigte Entnahme von derart siedendem Wasser zu verhindern ist, da es andernfalls zu Verbrühungen der bedienenden Person kommen kann.
Hier will die Erfindung Abhilfe schaffen. Der Erfindung liegt die Aufgabe zu Grunde, ein Ventiloberteil bereitzustellen, das sowohl eine Entnahme von Kalt- und Mischwasser sowie auch die Entnahme von siedendem Wasser eines angeschlossenen, drucklos betriebenen Boilers ermöglicht, wobei einer Fehlbedienung entgegengewirkt ist. Gemäß der Erfindung wird diese Aufgabe durch ein Ventiloberteil mit den Merkmalen des kennzeichnenden Teils des Patentanspruchs 1 gelöst.

Mit der Erfindung ist ein Ventiloberteil bereitgestellt, dass sowohl die Entnahme von Kalt- und Mischwasser, als auch die Entnahme von siedendem Wasser aus einem angeschlossenen, drucklos betriebenen Boiler ermöglicht, wobei einer Fehlbedienung entgegengewirkt ist. Dadurch, dass die Einlassscheibe zwei Kaltwasserzulaufbohrungen, zwei Kaltwasserauslaufbohrungen und eine Heißwasserzulaufbohrung aufweist, wobei die Steuerscheibe eine Ausnehmung aufweist, die zur Einstellung des Mischwassers mit einer ersten Kaltwasserzulaufbohrung und der Heißwasserzulaufbohrung in zumindest bereichsweise Überdeckung bringbar ist, wobei die Steuerscheibe mit einem Verbindungskanal versehen ist, welcher derart angeordnet ist, dass in einer Stellung der Steuerscheibe mit bereichsweiser Überdeckung der Ausnehmung mit der Heißwasserauslaufsbohrung die erste Kaltwasserauslaufsbohrung mit einem Kaltwasserzulauf verbunden ist und in einer weiteren Stellung der Steuerscheibe ohne Überdeckung der Ausnehmung mit einer Auslaufsbohrung die zweite Kaltwasserauslaufsbohrung mit einem Kaltwasserzulauf verbunden ist, ist eine Steuerung des Heißwasserzulaufs durch den separaten Heißwasseraustritt durch die Kaltwasserströme der beiden Kaltwasserauslaufbohrungen ermöglicht. Dabei indiziert der Druck des Kaltwasserstroms der ersten Kaltwasserauslaufsbohrung eine Unterbindung eines Heißwasserzulaufs aus dem Heißwasseraustritt, der zur Steuerung eines Ventils einsetzbar ist, um sicherzustellen, dass immer dann, wenn eine Überdeckung der Ausnehmung der Steuerscheibe mit der ersten Kaltwasserzulaufbohrung und/oder der Heißwasserzulaufbohrung vorhanden ist, keine separate Abgabe von siedendem Heißwasser erfolgt. Nur durch eine gegenläufige Bedienung der Steuerscheibe, derart, dass die Steuerscheibe keine Überdeckung der Ausnehmung mit einer Auslaufbohrung hat, ist der Verbindungskanal in eine Position bewegbar, bei der die zweite Kaltwasserauslaufsbohrung mit einem Kaltwasserdruck beaufschlagt wird, wodurch ein angeschlossener Boiler mit Förderdruck beaufschlagbar ist, um siedendes Heißwasser auszugeben. Auf diese Weise ist eine separate Ansteuerung von Kalt- und Mischwasser auf der einen Seite sowie von siedendem Heißwasser auf der anderen Seite durch die Scheibensteuerung erzielt. Erfindungswesentlich ist hierbei die Anordnung der Kaltwasserauslaufbohrungen zur Bereitstellung von zwei durch den Kaltwasserzulaufstrom bereitgestellten Steuer- und Förderdrücken zur Steuerung des Siedewasserstroms aus einem angeschlossenen Boiler. Der Begriff "Bohrung" ist vorliegend als Oberbegriff sowohl für eine Durchbohrung, als auch für eine Sacklochbohrung zu verstehen.

In Weiterbildung der Erfindung ist in dem Kopfstück wenigstens ein Durchtrittsfenster eingebracht, dass mit einem Mischraum verbunden ist, in den die Heißwasserzulaufbohrung und die erste Kaltwasserzulaufbohrung münden. Hierdurch ist ein seitlicher Mischwasseranschluss ermöglicht.

In Ausgestaltung der Erfindung ist in dem Kopfstück ein Bodenstück drehfest angeordnet, an dem die Einlassscheibe anliegt, wobei in dem Bodenstück wenigstens vier Kanäle angeordnet sind, die mit jeweils einer Bohrung der Einsatzscheibe fluchten. Hierdurch ist ein Anschluss der Zulaufleitungen des Ventilsitzes einer das Ventiloberteil aufnehmenden Armatur mit gerichteter Wasserzuführung zu den Zulauf- und Auslaufbohrungen der Einlassscheibe erzielt.

In weiterer Ausgestaltung der Erfindung ist der Verbindungskanal durch eine bogenförmige Mulde gebildet. Hierdurch ist ein im Wesentlichen gleichmäßiger Fluiddruckanstieg im Zuge der Überdeckung des Verbindungskanals mit einer Kaltwasserauslaufbohrung bewirkt.

In weiterer Ausgestaltung der Erfindung ist die zweite Kaltwasserzulaufbohrung als Sacklochbohrung ausgebildet, die über einen Bypasskanal mit der ersten Kaltwasserzulaufbohrung verbunden ist. Hierdurch ist lediglich ein Kaltwasserzulaufanschluss erforderlich. Die zweite Kaltwasserzulaufbohrung wird über den einen Abzweig des Kaltwasserzulaufs bildenden Bypasskanal gespeist. Bevorzugt geht die zweite Kaltwasserzulaufbohrung in eine Mulde über, die mit dem Bypasskanal verbunden ist. Alternativ kann die zweite Kaltwasserzulaufbohrung auch als Durchbohrung ausgeführt sein. Hierzu ist dann ein zusätzlicher Kaltwasserzulauf in dem Bodenstück bzw. dem Ventilsitz der Armatur erforderlich. In diesem Fall entfällt der Bypasskanal.

Gegenstand der Erfindung ist weiterhin eine Armatur, umfassend ein einen Auslaufhahn aufweisendes Gehäuse, mit einem Ventilsitz, der ein Ventiloberteil der vorstehenden Art aufnimmt und der mit einem Kaltwasserzulaufanschluss, einem Boilerzulaufanschluss und einem Boilerauslaufanschluss verbunden ist, mit den Merkmalen des Patentanspruchs 7. Hierbei ist der Boilerauslaufanschluss sowohl mit einer Heißwasserentnahmeleitung verbunden, die zumindest teilweise in den Auslaufhahn hineinragt, als auch über eine Heißwasserzulaufleitung über den Ventilsitz mit der Heißwasserauslaufbohrung der Einlassscheibe verbunden. Weiterhin ist der Boilerzulaufanschluss über den Ventilsitz sowohl über eine erste Kaltwasserauslaufleitung mit der ersten Kaltwasserauslaufbohrung und über eine zweite Kaltwasserauslaufleitung mit der zweiten Kaltwasserauslaufbohrung verbunden, wobei die erste Kaltwasserauslaufleitung über eine Steuerleitung mit einem in der Heißwasserentnahmeleitung angeordneten Ventil verbunden ist, das über den in der Steuerleitung anliegenden Druck betätigbar ist. Dabei ist immer dann, wenn eine Überdeckung der Ausnehmung der Steuerscheibe mit der Heißwasserzulaufbohrung vorliegt, die Steuerleitung über die erste Kaltwasserauslaufbohrung mit einem Kaltwasserdruck beaufschlagt, wodurch das Ventil geschlossen wird.

In Weiterbildung der Erfindung mündet die zweite Kaltwasserauslaufleitung in der ersten Kaltwasserauslaufleitung, wobei in der ersten Kaltwasserauslaufleitung zwischen dem Anschluss der zweiten Kaltwasserauslaufleitung und dem Anschluss der Steuerleitung ein als Rücklaufsperre dienendes Rücklaufventil angeordnet ist. Hierdurch ist der Anschluss von beiden Kaltwasserauslaufleitungen an ein und demselben Boilerzulaufanschluss ermöglicht. Durch das Rücklaufventil ist verhindert, dass bei einem Wasserzulauf über die erste Kaltwasserauslaufleitung durch einen Rückstau eine Druckbeaufschlagung der Steuerleitung erfolgt.

In weiterer Ausgestaltung der Erfindung ist an dem Gehäuse ein drehbar gelagertes Handstück angeordnet, das mit der Spindel des Ventiloberteils verbunden ist. Dabei ist bevorzugt an dem Handstück ein Drehbegrenzer angeordnet, der über ein Bedienteil deaktivierbar ist. Durch den Drehbegrenzer ist einem unbeabsichtigten Heißwasseraustritt aus der Heißwasserentnahmeleitung durch Fehlbedienung der Spindel weiter entgegengewirkt. Derartige Drehbegrenzer sind in unterschiedlicher Ausfertigung bei Druckarmaturen bekannt, wo der Thermostat beispielsweise auf mindestens 40°C begrenzt ist und nur durch Betätigung eines entsprechenden Bedienteils, das regelmäßig in Form eines Bedienknopfes ausgebildet ist, eine höhere Temperatur einstellbar ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

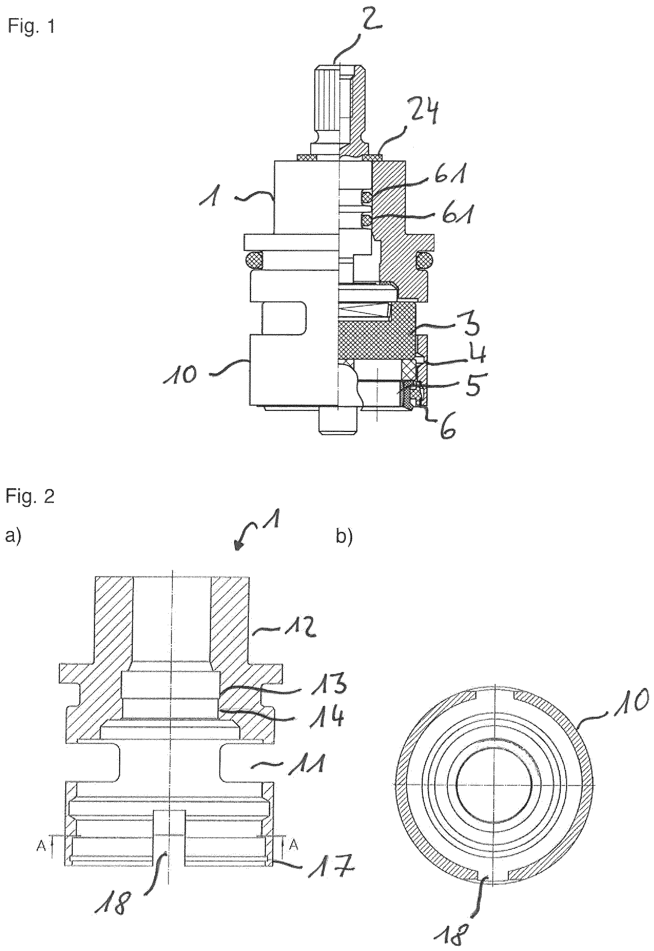

- Figur 1: die schematische Darstellung eines Ventiloberteils;
- Figur 2: die schematische Darstellung des Kopfstücks des Ventiloberteils aus Figur 1
a) im Längsschnitt;
b) im Querschnitt A-A der Darstellung aus A);

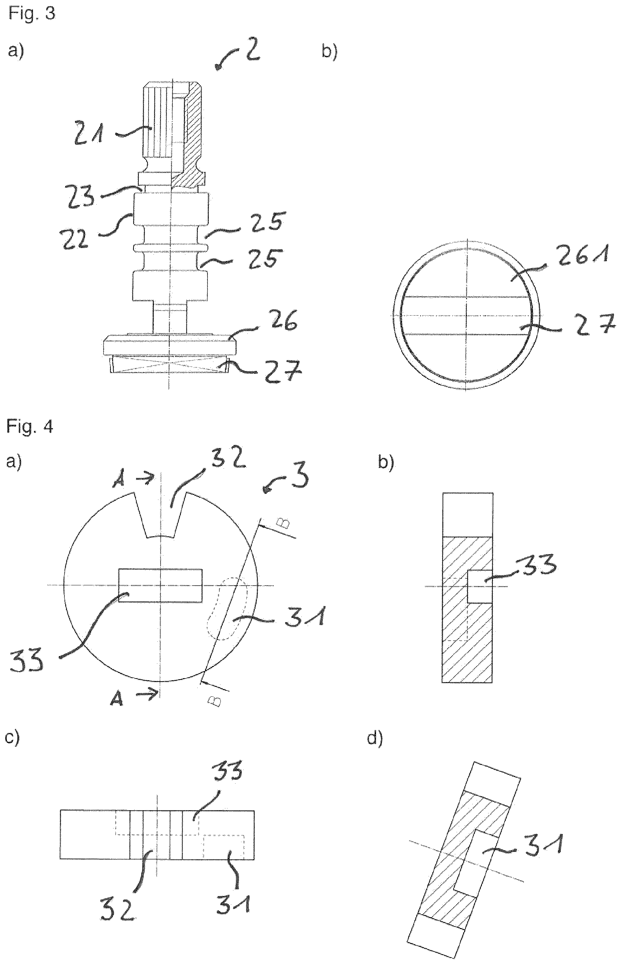

- Figur 3: die schematische Darstellung der Spindel des Ventiloberteils aus Figur 1
a) im Längsteilschnitt;
b) in der Ansicht von unten;
- Figur 4: die Darstellung der Steuerscheibe des Ventiloberteils aus Figur 1
a) in der Draufsicht;
b) im Querschnitt A-A der Darstellung aus A);
c) in der Seitenansicht;
d) im Querschnitt B-B der Darstellung aus A);

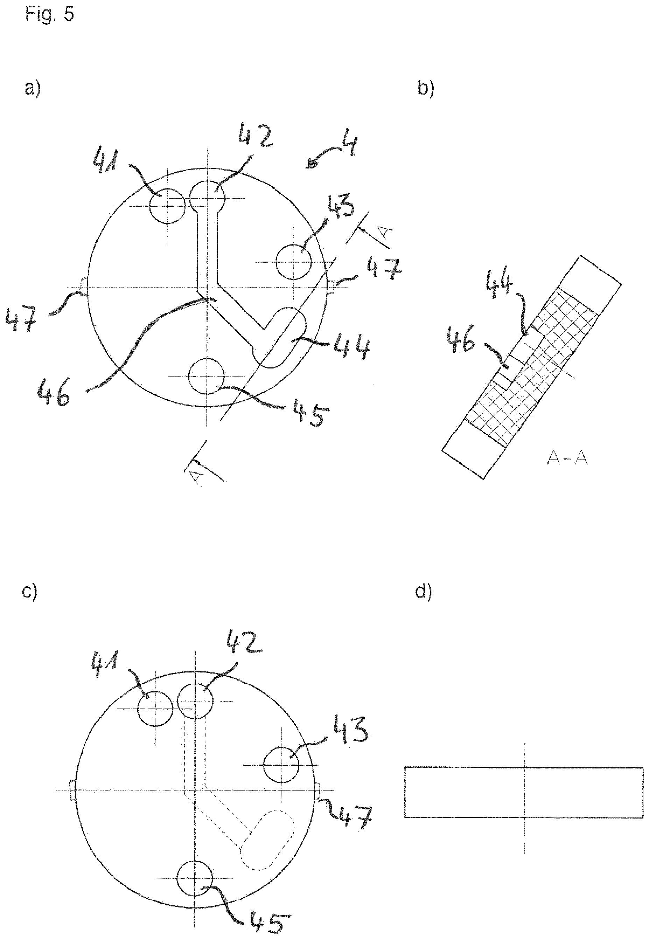

- Figur 5: die Darstellung der Einsatzscheibe des Ventiloberteils aus Figur 1
a) in der Ansicht von unten;
b) im Querschnitt A-A der Darstellung aus A);
c) in der Draufsicht;
d) in der Seitenansicht;
- Figur 6: die Darstellung des Bodenstücks des Ventiloberteils aus Figur 1
a) in der Draufsicht;
b) in der Seitenansicht;
- Figur 7: die schematische Darstellung einer Armatur mit integriertem Ventiloberteil nach Figur 1;
- Figur 8: die schematische Darstellung der Überdeckung von Steuerscheibe und Einlassscheibe (Scheibensteuerung) des Ventiloberteils aus Figur 1 in der Armatur nach Figur 7 in der Position
a) Heißwasserentnahmeleitung auf; Heißwasserzulauf, Kaltwasserzulauf zu;
b) Heißwasserzulauf und Kaltwasserzulauf zu; Heißwasserentnahmeleitung zu;
c) Kaltwasserzulauf auf, Heißwasserentnahmeleitung zu;
d) Kaltwasserzulauf auf, Heißwasserzulauf auf, Heißwasserentnahmeleitung zu.

Das als Ausführungsbeispiel gewählte Ventiloberteil besteht im Wesentlichen aus einem Kopfstück 1, das von einer in ihm radial geführten Spindel 2 mittig durchsetzt ist. Mit der Spindel 2 ist eine Steuerscheibe 3 formschlüssig verbunden und im Kopfstück 1 radial geführt. An ihrer der Spindel 2 abgewandten Seite der Steuerscheibe 3 ist eine Einlassscheibe 4 drehfest in dem Kopfstück 1 angeordnet, an das sich ein Bodenstück 5 anschließt. Das Bodenstück 5 ist mit Lippendichtungen 6 versehen, über die das Bodenstück 5 gegen die Einlassscheibe 4 sowie gegen den Ventilsitz 71 abgedichtet ist.

Das Kopfstück 1 besteht aus einem symmetrischen Hohlkörper, dessen beide Stirnflächen offen sind. Im Ausführungsbeispiel ist das Kopfstück 1 als Messingdrehteil hergestellt. An seiner dem Bodenstück 5 zugewandten Seite weist das Kopfstück 1 einen hülsenartigen Teil 10 auf, in dem gegenüberliegend zwei Durchtrittsfenster 11 angeordnet sind. Endseitig ist in dem hülsenartigen Teil innen eine umlaufende Rastnut 17 zur Aufnahme einer an das Bodenstück 5 angeformten Rastnasen angeordnet. Weiterhin sind endseitig diametral zueinander zwei rechteckförmige Aussparungen 18 zur Aufnahme der Nasen 46, 55 der Einlassscheibe 4 sowie des Bodenstücks 5 eingebracht.

An seinem den Durchtrittsfenstern 11 gegenüberliegenden Ende weist das Kopfstück 1 einen durchmesserreduzierten Abschnitt 12 auf, in dem innen eine umlaufende Nut 13 eingeformt ist. Innen ist durch den durchmesserreduzierten Abschnitt ein Absatz 14 gebildet.

Die Spindel 2 ist im Wesentlichen massiv ausgeführt. Sie ist an ihrer dem Kopfstück 1 abgewandten Stirnseite außen als Außenvielkant 21 ausgeführt. Anschließend ist außen an der Spindel 2 eine Zylinderfläche 22 vorgesehen, mit der die Spindel 2 in dem Kopfstück 1 radial geführt ist. Zwischen der Zylinderfläche 22 und dem Außenvielkant 21 ist ein Einstich 21 vorgesehen, in den eine Wellensicherung 24 in Form eines Sprengrings federnd eingelegt ist. Die Wellensicherung 24 verhindert das Eindringen der Spindel 2 in das Kopfstück 1 über das vorgesehene Maß hinaus. Weiterhin sind in der Zylinderfläche 22 zwei Ringnuten 25 eingebracht, die O-Ringe 61 aufnehmen. Auf der dem Außenvielkant 21 entgegengesetzten Seite der Spindel 2 ist eine Scheibe 26 angeformt, die auf ihrer dem Außenvielkant 21 abgewandten Seite einen Mitnehmer 27 aufweist. Den Mitnehmer 27 einfassend ist auf der Scheibe 26 ein durchmesserreduzierter Absatz 261 geringerer Höhe angeformt.

Die Steuerscheibe 3 ist im Wesentlichen als kreisrunde Keramikscheibe ausgebildet, in die beabstandet zu Ihrem Außenrand ein Verbindungskanal 31 in Form einer kreisbogenförmigen Vertiefung eingebracht ist, die sich über einen Winkel von etwa 50° erstreckt. Dem Durchlasskanal gegenüberliegend ist in die Steuerscheibe eine kreissegmentförmige Ausnehmung 32 eingebracht. Auf ihrer der Spindel 2 zugewandten Seite weist die Steuerscheibe 3 einen quaderförmigen Eingriff 34 zur Aufnahme des Mitnehmers 27 der Spindel 2 auf.

Die Einlassscheibe 4 ist im Wesentlichen als kreisrunde Keramikscheibe ausgebildet, in die beabstandet zueinander fünf Bohrungen eingebracht sind: eine Heißwasserzulaufbohrung 41, eine erste Kaltwasserzulaufbohrung 42, eine erste Kaltwasserauslaufsbohrung 43, eine zweite Kaltwasserauslaufbohrung, die als Sackbohrung in Form einer Kaltwasserzulaufmulde 44 ausgebildet ist sowie eine zweite Kaltwasserauslaufbohrung 45. Die Kaltwasserzulaufmulde 44 ist über einen Bypasskanal 46 mit der ersten Kaltwasserzulaufbohrung 42 verbunden. Zur drehfesten Fixierung der Einlassscheibe 4 in dem Kopfstück 1 sind an dieser seitlich diametral zueinander zwei rechteckförmige Nasen 47 zum Eingriff in die Aussparungen 18 des Kopfstücks 1 angeformt.

Das Bodenstück 5 ist im Wesentlichen in Form einer kreisrunden Scheibe ausgebildet. In dem Bodenstück 5 sind jeweils in Form einer Bohrung ein erster Einlasskanal 51, ein zweiter Einlasskanal 52 sowie ein erster Auslaufkanal 53 und ein zweiter Auslaufkanal 54 eingebracht. Der erster Einlasskanal 51 fluchtet mit der Heißwasserzulaufbohrung 41, der zweite Einlasskanal mit der ersten Kaltwasserzulaufbohrung 42, der erste Auslaufkanal 53 mit der ersten Kaltwasserauslaufbohrung 43 und der zweite Auslaufkanal 54 mit der zweiten Kaltwasserauslaufbohrung 45 der Einlassscheibe 4. Die Kanäle 51, 52, 53, 54 nehmen Lippendichtungen 6 auf, die jeweils einen Stützring 62 aufnehmen und das Bodenstück 5 gegen die Einlassscheibe 4 sowie gegen den Ventilsitz 71 der Armatur 7 abdichten. Seitlich sind an dem Bodenstück 5 diametral zueinander zwei rechteckförmige Nasen 55 zum Eingriff in die Aussparungen 18 des Kopfstücks 1 angeformt. Seitlich der Nasen 55 sind weiterhin Rastnasen 57 zum Eingriff in die Rastnut 17 des Kopfstücks 1 angeformt. Diese Rastnasen 57 ermöglichen eine Rastverbindung zwischen dem Bodenstück 5 und dem Kopfstück 1. An seiner dem Kopfstück 1 abgewandten Unterseite ist an dem Bodenstück 5 weiterhin ein Positionierstift 56 zum Eingriff in eine mit diesem korrespondierende Positionierbohrung des Ventilsitzes 71 einer Armatur 7 angeformt.

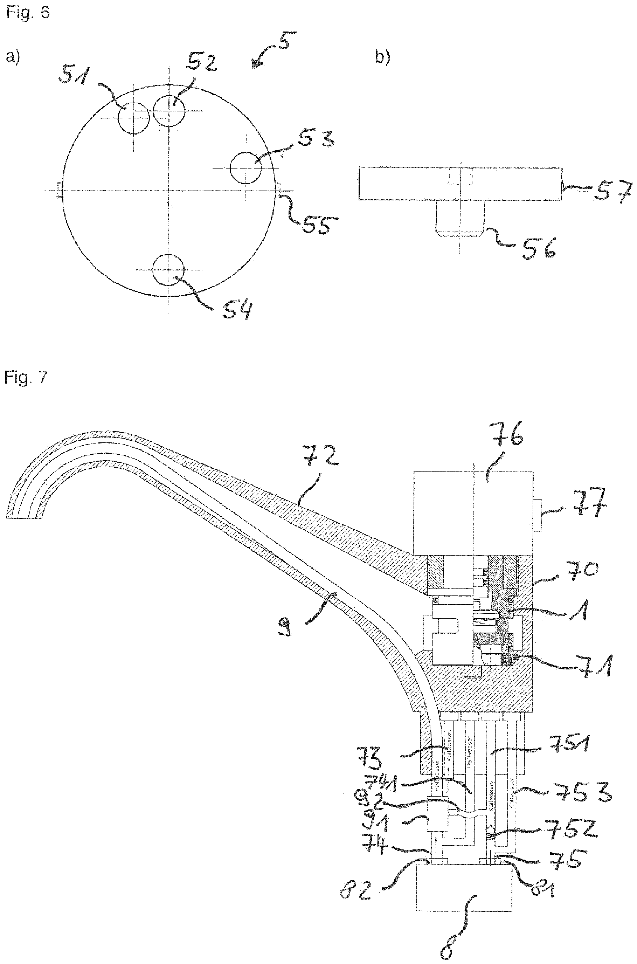

In Figur 7 ist eine Armatur 7 zur Aufnahme des zuvor beschriebenen Ventiloberteils dargestellt. Die Armatur 7 umfasst ein Gehäuse 70 mit einem Ventilsitz 71, an dem ein Auslaufhahn 72 angeordnet ist. Der Ventilsitz 71 nimmt das Ventiloberteil mit seinem Kopfstück 1 auf, wobei die Spindel 2 des Ventiloberteils formschlüssig mit dem Handstück 76 der Armatur 7 verbunden ist, über das die Spindel 2 drehbar ist. Das Handstück 76 ist mit einem Drehsperrknopf 77 versehen, über den ein - nicht dargestellter - Anschlag aufhebbar ist, durch den eine unbeabsichtigte Stellung der Scheibensteuerung, bei der heißes Wasser aus einem angeschlossenen Boiler 8 in die Heißwasserentnahmeleitung 9 geleitet wird, verhindert ist.

An dem Gehäuse ist ein Kaltwasserzulaufanschluss 73, ein Boilerzulaufanschluss 74 sowie ein Boilerauslaufanschluss 75 angeordnet. Der Boilerzulaufanschluss 74 ist mit dem Zulaufanschluss 81 und der Boilerauslaufanschluss 75 mit den Auslaufanschluss 82 des Boilers 8 verbunden. Der Boiler 8 ist in diesem System drucklos betrieben. Der Boilerzulaufanschluss 74 verzweigt sich in eine Heißwasserzulaufleitung 741, die über den Ventilsitz 71 mit der Heißwasser Zulaufbohrung 41 des Ventiloberteils verbunden ist, und eine Heißwasserentnahmeleitung 9, die durch den Auslaufhahn 72 der Armatur 7 geführt ist. Der Boilerauslaufanschluss 75 verzweigt sich in eine erste Kaltwasserauslaufleitung 751 und eine zweite Kaltwasserauslaufleitung 753, die jeweils in dem Ventilsitz 71 münden und mit der ersten Kaltwasserauslaufbohrung 43 bzw. der zweiten Kaltwasserauslaufbohrung 45 der Einlassscheibe 4 des Ventiloberteils fluchten. Von der ersten Kaltwasserauslaufleitung 751 zweigt eine Steuerleitung 92 ab, die mit einem in der Heißwasserentnahmeleitung 9 angeordneten Ventil 91 verbunden ist. Das Ventil 91 ist über den in der Steuerleitung 92 anliegenden Fluiddruck derart steuerbar, dass bei einem anliegenden Fluiddruck das Ventil 91 geschlossen ist. In der ersten Kaltwasserauslaufleitung 751 ist zwischen dem Anschluss der zweiten Kaltwasserauslaufleitung 753 und dem Anschluss der Steuerleitung 92 ein Rücklaufventil in Form eines Kugelrückschlagventils 752 angeordnet.

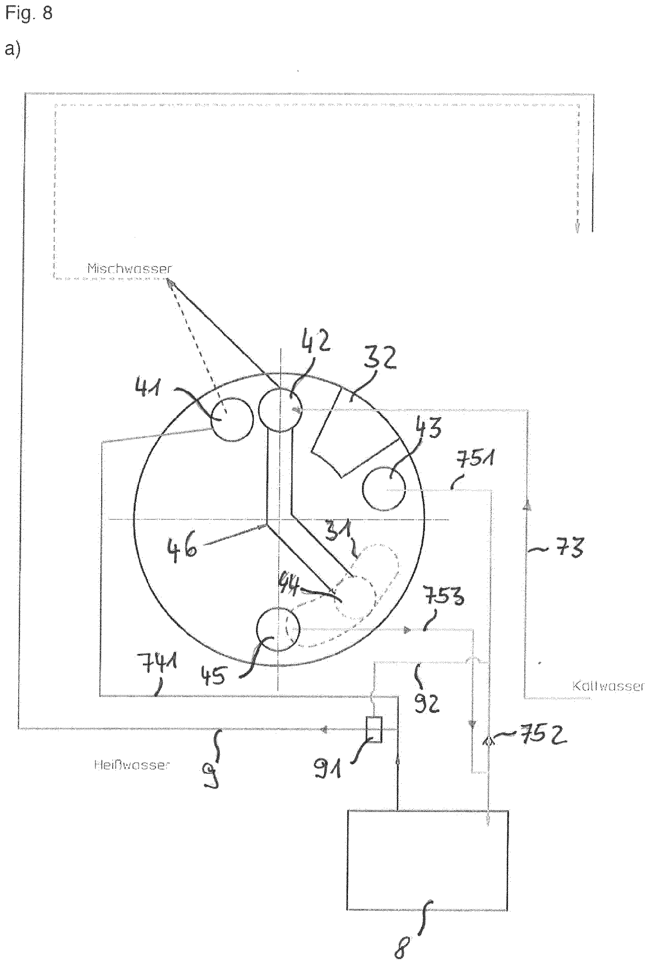

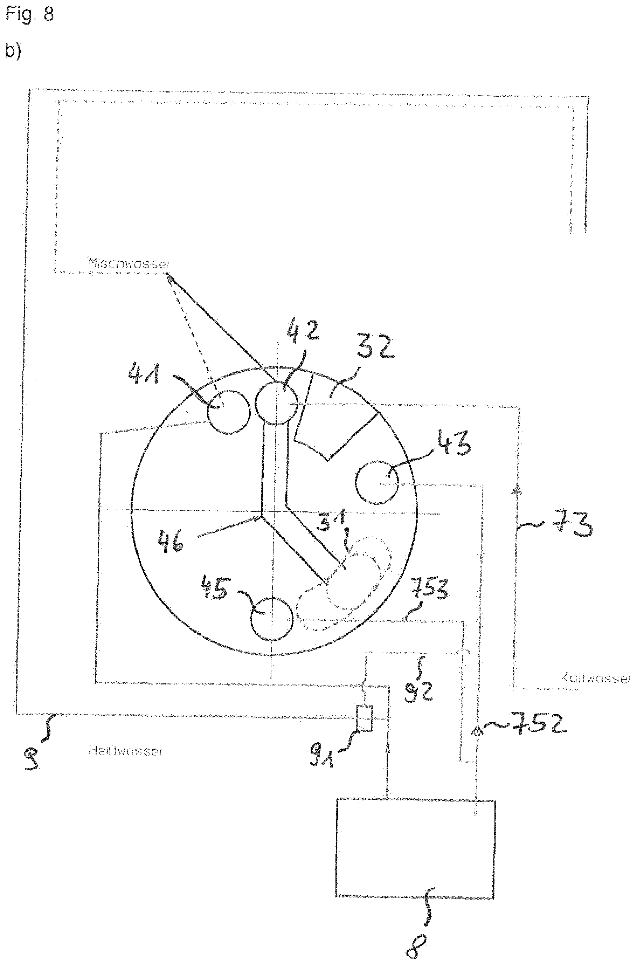

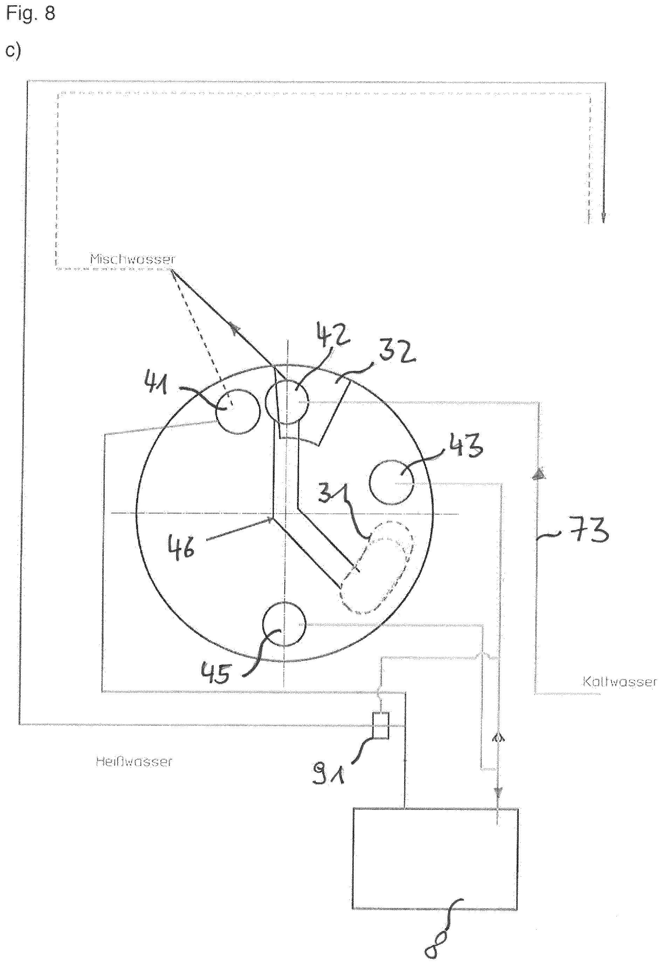

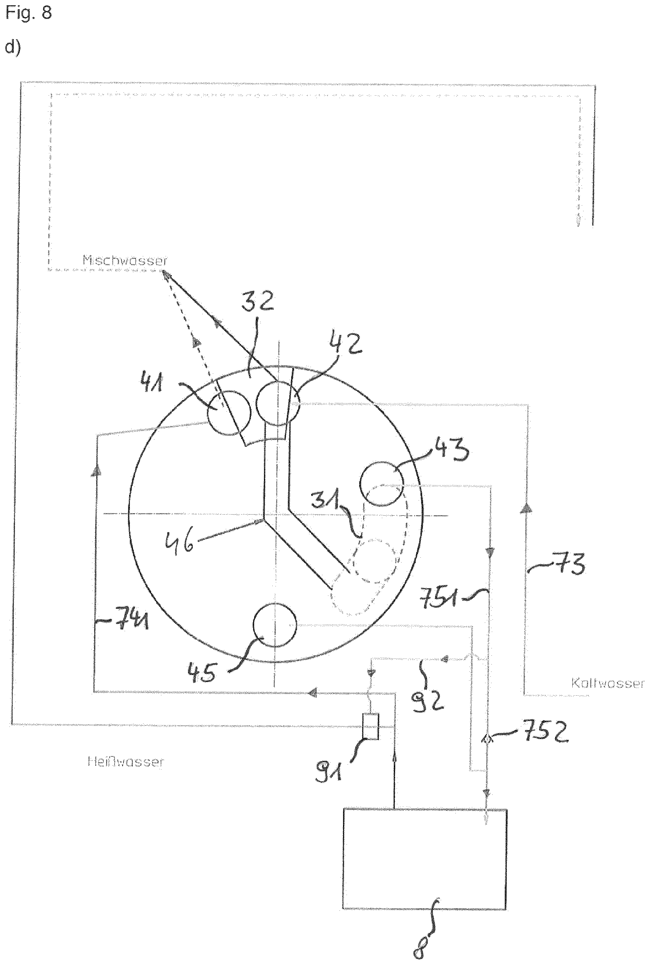

In Figur 8 sind verschiedene Stellungen der aus der über die Spindel 2 drehbaren Steuerscheibe 3 und der drehfest angeordneten Einlassscheibe 4 gebildeten Scheibensteuerung schematisch dargestellt. In der Stellung gemäß Figur 8 a) befindet sich die Ausnehmung 32 der Steuerscheibe 3 in keiner Überdeckung mit der Heißwasserzulaufbohrung 41 oder der ersten Kaltwasserzulaufbohrung 42 der Einlassscheibe 4. Es findet kein Mischwasseraustritt statt. Der Verbindungskanal 31 der Steuerscheibe 3 ist in Überdeckung mit der Kaltwasserzulaufmulde 44, die über die erste Kaltwasserzulaufbohrung 42 und den Bypasskanal 46 mit dem Kaltwasserzulauf 43 verbunden ist, und der zweiten Kaltwasserauslaufbohrung 45. Die zweite Kaltwasserauslaufleitung 753 wird so mit Kaltwasser gespeist das in den Boiler 8 gelangt, der so mit Druck beaufschlagt wird, wodurch Heißwasser in die Heißwasserentnahmeleitung 9 gefördert wird. Die Steuerleitung 92 ist nicht mit Wasserdruck beaufschlagt, weshalb das Ventil 91 geöffnet ist. Über die Heißwasserzulaufleitung 741 fließt kein Heißwasser, da die Heißwasserzulaufbohrung 41 der Einlassscheibe 4 nicht mit der Ausnehmung 32 der Steuerscheibe 3 in Überdeckung ist. Die dargestellte Stellung der Scheibensteuerung dient somit der Entnahme von siedendem Heißwasser aus dem Boiler 8 über die Heißwasserentnahmeleitung 9.

In der Stellung gemäß Figur 8 b) ist die Ausnehmung 32 der Steuerscheibe 3 mit keiner Bohrung der Einlassscheibe 4 in Überdeckung. Auch der Verbindungskanal 31 ist mit keiner Auslaufsbohrung der Einlassscheibe 4 verbunden. Die Scheibensteuerung befindet sich in geschlossener Stellung. Es wird weder Heißwasser noch Mischwasser ausgegeben. Da kein Kaltwasserdruck in den Boiler gelangt, wird aus diesem auch kein Heißwasser gefördert. Eine Betätigung des Ventils 91 ist daher nicht erforderlich. Die Heißwasserentnahmeleitung 9 ist freigeschaltet, wodurch ein offenes System gegeben ist.

In der Stellung gemäß Figur 8 c) ist die Ausnehmung 32 der Steuerscheibe 3 in Überdeckung mit der ersten Kaltwasserzulaufbohrung 42 der Einlassscheibe 4. Weiterhin ist der Verbindungskanal 31 mit keiner Auslaufbohrung der Einlassscheibe 4 in Überdeckung. Die Scheibensteuerung befindet sich in der Stellung "Kaltwasser". Es fließt lediglich kaltes Wasser durch die Mischwasser Leitung. Auch wird der Boiler nicht mit Kaltwasserdruck beaufschlagt, weshalb kein Heißwasser gefördert wird.

In der Stellung gemäß Figur 8 d) befindet sich die Ausnehmung 32 der Steuerscheibe 3 in Überdeckung sowohl mit der Heißwasserzulaufbohrung 41, als auch mit der ersten Kaltwasserzulaufbohrung 42 der Einlassscheibe 4. Zugleich ist der Verbindungskanal 31 der Steuerscheibe 3 in Überdeckung mit der ersten Kaltwasserauslaufbohrung 43, wodurch der Boiler 8 über die erste Kaltwasserauslaufleitung 751 mit Wasserdruck beaufschlagt wird. Hierdurch wird Heißwasser von dem Boiler 8 über die Heißwasserzulaufleitung 741 durch die Heißwasserzulaufbohrung 41 gefördert. Zugleich ist die Steuerleitung 92 mit Druck beaufschlagt, weshalb das Ventil 91 geschlossen ist. Es gelangt somit kein siedendes Heißwasser durch die Heißwasserentnahmeleitung 9. Die Scheibensteuerung befindet sich so in einer Mischwasserstellung.

## Patentansprüche

1. Ventiloberteil für eine einen Mischwasseraustritt und einen separaten Heißwasseraustritt aufweisende, mit einem Boiler in einem drucklosen System betreibbare Armatur, mit einem Kopfstück, das von einer Spindel mittig durchsetzt ist, über die eine Scheibensteuerung betätigbar ist, die eine Steuerscheibe umfasst, die relativ zu einer drehfest angeordneten Einlassscheibe drehbar angeordnet ist, **dadurch gekennzeichnet, dass** die Einlassscheibe (4) zwei Kaltwasserzulaufbohrungen (42, 44), zwei Kaltwasserauslaufbohrungen (43, 45) und eine Heißwasserzulaufbohrung (41) aufweist, wobei die Steuerscheibe (3) eine Ausnehmung (32) aufweist, die zur Einstellung des Mischwassers mit einer ersten Kaltwasserzulaufbohrung (42) und der Heißwasserzulaufbohrung (41) in zumindest bereichsweise Überdeckung bringbar ist, wobei die Steuerscheibe (3) mit einem Verbindungskanal (31)versehen ist, welcher derart angeordnet ist, dass in einer Stellung der Steuerscheibe (3) mit bereichsweiser Überdeckung der Ausnehmung (32) mit der Heißwasserzulaufbohrung (41) die erste Kaltwasserauslaufbohrung (43) mit einem Kaltwasserzulauf verbunden ist und in einer weiteren Stellung der Steuerscheibe (3) ohne Überdeckung der Ausnehmung (32) mit einer Auslaufbohrung die zweite Kaltwasserauslaufbohrung (45) mit einem Kaltwasserzulauf verbunden ist.

2. Ventiloberteil nach Anspruch 1, **dadurch gekennzeichnet, dass** in dem Kopfstück (1) wenigstens ein Durchtrittsfenster (11) eingebracht ist, das mit einem Mischraum verbunden ist, in den die Heißwasserzulaufbohrung (41) und die erste Kaltwasserzulaufbohrung (42) münden.

3. Ventiloberteil nach Anspruch 1 oder 2, **dadurch gekennzeichnet, dass** in dem Kopfstück (1) ein Bodenstück (5) drehfest angeordnet ist, an dem die Einlassscheibe (4) anliegt, wobei in dem Bodenstück (5) wenigstens vier Kanäle angeordnet sind, die mit jeweils einer Bohrung (41, 42, 44, 45) der Einlassscheibe (4) fluchten.

4. Ventiloberteil nach einem der vorgenannten Ansprüche, **dadurch gekennzeichnet, dass** der Verbindungskanal (31) durch eine bogenförmige Mulde gebildet ist.

5. Ventiloberteil nach einem der vorgenannten Ansprüche, **dadurch gekennzeichnet, dass** die zweite Kaltwasserzulaufbohrung als Sacklochbohrung ausgebildet ist, die über einen Bypasskanal (46) mit der ersten Kaltwasserzulaufbohrung (42) verbunden ist.

6. Ventiloberteil nach Anspruch 5, **dadurch gekennzeichnet, dass** die zweite Kaltwasserzulaufbohrung in eine Mulde (44) übergeht, die mit dem Bypasskanal (46) verbunden ist.

7. Armatur, umfassend ein einen Auslaufhahn (72) aufweisendes Gehäuse (70), mit einem Ventilsitz (71), der ein Ventiloberteil nach einem der vorgenannten Ansprüche aufnimmt, und der mit einem Kaltwasserzulaufanschluss (73), einem Boilerzulaufanschluss (74) und einem Boilerauslaufanschluss (75) verbunden ist, wobei der Boilerauslaufanschluss (75) sowohl mit einer Heißwasserentnahmeleitung (9) verbunden ist, die zumindest teilweise in den Auslaufhahn (72) hineinragt, als auch über eine Heißwasserzulaufleitung (741) über den Ventilsitz (71) mit der Heißwasserauslaufbohrung (41) der Einlassscheibe (4) verbunden ist, und der Boilerzulaufanschluss (74) über den Ventilsitz (71) sowohl über eine erste Kaltwasserauslaufleitung (751) mit der ersten Kaltwasserauslaufbohrung (43) und über eine zweite Kaltwasserauslaufleitung (753) mit der zweiten Kaltwasserauslaufbohrung (45) verbunden ist, wobei die erste Kaltwasserauslaufleitung (751) über eine Steuerleitung (92) mit einem in der Heißwasserentnahmeleitung (9) angeordneten Ventil (91) verbunden ist, das über den in der Steuerleitung (92) anliegenden Druck betätigbar ist.

8. Armatur nach Anspruch 7, **dadurch gekennzeichnet, dass** die zweite Kaltwasserauslaufleitung (753) in der ersten Kaltwasserauslaufleitung (751) mündet, wobei in der in der ersten Kaltwasserauslaufleitung (751) zwischen dem Anschluss der zweiten Kaltwasserauslaufleitung (753) und dem Anschluss der Steuerleitung (92) ein Rücklaufventil (91) angeordnet ist.

9. Armatur nach Anspruch 7 oder 8, **dadurch gekennzeichnet, dass** an dem Gehäuse (70) ein drehbar gelagertes Handstück (76) angeordnet ist, das mit der Spindel (2) des Ventiloberteils verbunden ist.

10. Armatur nach Anspruch 9, **dadurch gekennzeichnet, dass** an dem Handstück (76) ein Drehbegrenzer angeordnet ist, der über ein Bedienteil deaktivierbar ist.

## Claims

1. Valve top for a fitting having a mixed water outlet and a separate hot water outlet and being operable by means of a boiler in an unpressurised system, having a head piece centrally penetrated by a spindle, via which a disc control is operable which comprises a control disc, which is rotatably arranged relative to a non-rotatably arranged inlet disc, **characterised in that** the inlet disc (4) has two cold water inlet bores (42, 44), two cold water outlet bores (43, 45) and one hot water inlet bore (41), wherein the control disc (3) has a recess (32), which can be brought into at least partial coverage with a first cold water inlet bore (42) and the hot water inlet bore (41) for adjusting the mixed water, wherein the control disc (3) is provided with a connecting channel (31), which is arranged in a manner that in one position of the control disc (3) with a partial coverage of the recess (32) with the hot water inlet bore (41), the first cold water outlet bore (43) is connected to a cold water inlet and in a further position of the control disc (3) without coverage of the recess (32) with an outlet bore, the second cold water outlet bore (45) is connected to a cold water inlet.

2. Valve top according to claim 1, **characterised in that** at least one through window (11) is inserted in the head piece (1), which is connected to a mixing chamber, into which the hot water inlet bore (41) and the first cold water inlet bore (42) open.

3. Valve top according to claim 1 or 2, **characterised in that** a base piece (5) is non-rotatably arranged in the head piece (1), against which the inlet disc (4) rests, wherein in the base piece (5) at least four channels are arranged, which align with one bore (41, 42, 44, 45) each of the inlet disc (4).

4. Valve top according to one of the previous claims, **characterised in that** the connecting channel (31) is formed by an arcuate cavity.

5. Valve top according to one of the previous claims, **characterised in that** the second cold water inlet bore is designed as a blind hole, which is connected to the first cold water inlet bore (42) via a bypass channel (46).

6. Valve top according to claim 5, **characterised in that** the second cold water inlet bore merges into a cavity (44), which is connected to the bypass channel (46).

7. Fitting comprising a housing (70) having an outlet tap (72), with a valve seat (71), which receives a valve top according to one of the previous claims and which is connected to a cold water inlet connection (73), a boiler inlet connection (74) and a boiler outlet connection (75), wherein the boiler outlet connection (75) is connected to a hot water discharge pipe (9), which at least partially protrudes into the outlet tap (72), and is also connected to the hot water outlet bore (41) of the inlet disc (4) via a hot water inlet pipe (741) via the valve seat (71) and the boiler inlet connection (74) is connected via the valve seat (71) to the first cold water outlet bore (43) via a first cold water outlet pipe (751) and to the second cold water outlet bore (45) via a second cold water outlet pipe (753), wherein the first cold water outlet pipe (751) is connected via a control pipe (92) to a valve (91) arranged in the hot water discharge pipe (9), which can be operated via the pressure applied in the control pipe (92).

8. Fitting according to claim 7, **characterised in that** the second cold water outlet pipe (753) opens into the first cold water outlet pipe (751), wherein in the first cold water outlet pipe (751) a return valve (91) is arranged between the connection of the second cold water outlet pipe (753) and the connection of the control pipe (92).

9. Fitting according to claim 7 or 8, **characterised in that** a rotatably mounted handle (76) is arranged at the housing (70), which is connected to the spindle (2) of the valve top.

10. Fitting according to claim 9, **characterised in that** a rotation limiter is arranged at the handle (76), which can be deactivated via an operating device.

## Revendications

1. Partie supérieure de soupape pour une robinetterie présentant une sortie d'eau mélangée et une sortie séparée d'eau chaude, et exploitable avec un chauffe-eau dans un système hors pression, comprenant une pièce têtière traversée en son milieu par une broche via laquelle peut être actionnée une commande à disque comprenant un disque de commande disposé pour pouvoir tourner relativement à un disque d'admission disposé de façon à ne pas pouvoir tourner, **caractérisée en ce que** le disque d'admission (4) présente deux alésages d'entrée d'eau froide (42, 44), deux alésages de sortie d'eau froide (43, 45) et un alésage d'entrée d'eau chaude (41), sachant que le disque de commande (3) présente un évidement (32) qu'il est possible d'amener, pour ajuster l'eau mélangée, au moins localement en superposition avec un premier alésage d'entrée d'eau froide (42) et l'alésage d'entrée d'eau chaude (41), sachant que le disque de commande (3) est muni d'un conduit de liaison (31) disposé de sorte que lorsque l'évidement (32) du disque de commande (3) se trouve en superposition partielle avec l'alésage d'entrée d'eau chaude (41), le premier alésage de sortie d'eau froide (43) est relié à une entrée d'eau froide, et que dans une position plus avancée du disque de commande (3) sur laquelle l'évidement (32) n'est pas en superposition avec un alésage de sortie, le deuxième alésage de sortie d'eau froide (45) est relié à une entrée d'eau froide.

2. Partie supérieure de soupape selon la revendication 1, **caractérisée en ce que** dans la pièce têtière (1) a été ménagée au moins une baie de passage (11) qui est reliée avec une cavité de mélange dans laquelle aboutissent l'alésage d'entrée d'eau chaude (41) et le premier alésage d'entrée d'eau froide (42).

3. Partie supérieure de soupape selon la revendication 1 ou 2, **caractérisée en ce que** dans la pièce têtière est disposée une pièce de fond (5) ne pouvant pas tourner et contre laquelle applique le disque d'admission (4), sachant que dans la pièce de fond (5) sont disposés au moins quatre canaux qui sont chacun dans l'alignement d'un alésage (41, 42, 44, 45) du disque d'admission (4).

4. Partie supérieure de soupape selon l'une des revendications précédentes, **caractérisée en ce que** le conduit de liaison (31) est constitué par une auge en forme d'arc.

5. Partie supérieure de soupape selon l'une des revendications précédentes, **caractérisée en ce que** le deuxième alésage d'entrée d'eau froide est configuré en trou borgne qui est relié via un conduit de bypass (46) avec le premier alésage d'entrée d'eau froide (42).

6. Partie supérieure de soupape selon la revendication 5, **caractérisée en ce que** le deuxième alésage d'entrée d'eau froide devient une auge (44) qui est reliée avec le conduit de bypass (46).

7. Robinetterie comprenant un carter (70) qui présente un robinet de sortie (72), avec un siège de soupape (71) qui reçoit une partie supérieure de soupape selon l'une des revendications précédentes et qui est relié avec un raccordement d'entrée d'eau froide (73), un raccordement d'entrée d'eau du chauffe-eau (74) et un raccordement de sortie d'eau du chauffe-eau (75), sachant que le raccordement de sortie de l'eau du chauffe-eau (75) est relié aussi bien avec une conduite de prélèvement d'eau chaude (9) qui fait au moins partiellement saillie dans le robinet de sortie (72) qu'avec - via une conduite d'entrée d'eau chaude (741) et le siège de soupape (71) - l'alésage de sortie d'eau chaude (41) du disque d'admission (4), et que le raccordement d'entrée d'eau du chauffe-eau (74) est relié, via le siège de soupape (71), aussi bien au premier alésage de sortie d'eau froide (43) via une première conduite de sortie d'eau froide (751), qu'au deuxième alésage de sortie d'eau froide (45) via une deuxième conduite de sortie d'eau froide (753), sachant que la première conduite de sortie d'eau froide (751) est reliée via une conduite de commande (92) à une soupape (91) disposée dans la conduite de prélèvement d'eau chaude (9), soupape qui est actionnable via la pression régnant dans la conduite de commande (92).

8. Robinetterie selon la revendication 7, **caractérisée en ce que** la deuxième conduite de sortie d'eau froide (753) débouche dans la première conduite de sortie d'eau froide (751), sachant que dans la première conduite de sortie d'eau froide (751) est disposée une soupape de retour (91) entre le raccordement de la deuxième conduite de sortie d'eau froide (753) et le raccordement de la conduite de commande (92).

9. Robinetterie selon la revendication 7 ou 8, **caractérisée en ce que** contre le carter (70) est disposée une pièce à main (76) en appui rotatif qui est reliée avec la broche (2) de la partie supérieure de soupape.

10. Robinetterie selon la revendication 9, **caractérisée en ce que** sur la pièce à main (76) est disposé un limiteur de rotation qu'il est possible de désactiver via un organe de commande.
